# EUROPEAN PATENT SPECIFICATION

(11) **EP 2 121 228 B1**
(45) Date of publication and mention of the grant of the patent: **09.06.2010**
(21) Application number: 06835667.4
(22) Date of filing: 20.12.2006
(51) Int. Cl.: B23D 47/06, B23D 45/02, B27B 5/20

(54) **MACHINE TOOL AND METHOD FOR CUTTING ELONGATED PROFILED ELEMENTS**
WERKZEUGMASCHINE UND VERFAHREN ZUM SCHNEIDEN VON LÄNGLICHEN PROFILELEMENTEN
OUTIL DE MACHINE ET PROCEDE DE COUPAGE DES D'ELEMENTS PROFILES ALLONGES

(43) Date of publication of application: 25.11.2009
(73) Proprietor: Patents Exploitation Company B.V., 1082 MD Amsterdam (NL)
(72) Inventor: ALBERTOLLI, Luigi, 6807 Torricella Taverne (CH)
(74) Representative: Crugnola, Pietro
(86) International application number: PCT/NL2006/000644
(87) International publication number: WO 2008/075937

(56) References cited:
- EP-A- 0 453 747
- WO-A-01/28724
- DE-A1- 3 823 635
- DE-A1- 4 332 630
- DE-A1- 19 507 989
- JP-A- 5 220 701
- US-A1- 2002 078 808
- US-A1- 2004 069 106

## Description

The invention relates to a machine tool for machining elongated elements, in particular metallic and/or plastic profiled elements of door and windows frames and the like. Machine tools are known, commonly known as cutting-off machines, which comprise a cutting unit provided with a blade or saw with a rotating disc, for interacting with an elongated element to be machined, supported and clamped by supporting means. In general, the supporting means has a plurality of vices spaced apart from one another and aligned along a first direction X substantially parallel to a longitudinal axis of the element. The vices engage and clamp the elongated element, which can be machined by the cutting unit.

The cutting unit is generally movable along an advancing direction Y, for example horizontal or vertical, that is almost orthogonal to the first direction X; the cutting unit is automatically driven by moving means.

Alternatively, the cutting unit can be rotatable around a rotation axis parallel to the first direction X and orthogonal to a plane on which the disc blade lies, the latter thus being movable along a curved advancing trajectory.

There are cuttirig-off machines wherein the cutting unit is mounted rotatable around a rotation axis that is almost orthogonal to the first direction X and lying on the plane containing the disc blade, in order to perform cuts at different angles.

Some cutting units are rotatable around a second rotation axis that is orthogonal to the first rotation axis and to the first direction X to perform combined rotations. In cutting-off machines wherein the cutting unit is rotatably movable, the cut is made by manually moving the elongated element along the advancing direction Y.

A drawback of the above-disclosed cutting-off machines consists in that each of them allows performing a preset and limited type of machining on the elongated element. In the case of several consecutive machinings, for example butting cuts at both element ends, or complex machinings, such as angled cuts or cuts requiring a plurality of subsequent blade actions, or machinings to be performed on different sides of the element, the element must be manually repositioned on the supporting means several time or even it must be moved to a different machine tool.

Subsequent repositioning of the element to be machined may introduce positioning errors of the latter, so compromising the quality and the precision of machinings.

Another drawback of such machines consists in that they require one or more skilled operators for manually removing and positioning the elements, with a consequent limited type of machining on the elongated element. In the case of several consecutive machinings, for example butting cuts at both element ends, or complex machinings, such as angled cuts or cuts requiring a plurality of subsequent blade actions, or machinings to be performed on different sides of the element, the element must be manually repositioned on the supporting means several time or even it must be moved to a different machine tool.

Subsequent repositioning of the element to be machined may introduce positioning errors of the latter, so compromising the quality and the precision of machinings.

Another drawback of such machines consists in that they require one or more skilled operators for manually removing and positioning the elements, with a consequent increase of production costs. These manual operations are slow and laborious to be performed and cause a considerable increase of total machining time of each element and, therefore, a corresponding decrease of the machine tool productivity. Furthermore, the operator may make mistakes by wrongly positioning and clamping the element, or even worse may accidentally injure himself by touching element sharp edges that have been made in a previous machining.

A further drawback of certain known machines lies in that elements to be machined must be manually moved in the advancing direction. This manual operation can be hard and tiring for an operator and usually it is slow and leads to errors and imprecisions that may jeopardise the machining quality.

Still another drawback of the above disclosed machine tools is that, if cuts have to be performed, especially tilted or angled cuts, of elements having a cross section of large dimensions, it is necessary to use blades of suitable dimensions to perform the task in a single pass, in order to avoid repositioning the element.

US 2002/078808 A1 disclose a micromachining system configured for cutting an elongate object, comprising a clamp configured to enable repeatedly releasing and then holding the elongate object in a position suitable for cutting the elongate object transversely relative to the lengthwise axis and a pinch roller feed configured to advance the elongate element and to rotate it about a lengthwise axis of the elongate object, thereby moving the elongate object so that it can be disposed in the position suitable for cutting, and a cutter configured for forming the at least one precision cut in the elongate object to a desired depth.

WO 01/28724 A dicloses a cutting device comprising a pivotably cutter drive support section, which comprises a cutter drive unit, a right hand cutter disc and a left hand cutter disc. The support unit also includes a cutter feed drive motor which drives a support bracket backward and forwards to move the cutter discs in the direction of their plane of rotation towards a pipe to be cut. The pivotable adjustment of the support unit allows for different angles of cutting for production of a chamfered edge of a pipe. DE 3823635 A1 discloses an apparatus for the machining of sectional bars for window or door sections. The apparatus comprises a milling device and a sawing device on a slide movable transversely to the feed direction of the sectional bars and extending on both sides of the sectional bar.

DE 19507989 A1 discloses a machining unit for cutting workpieces. The machining unit comprise a carrier and at least one arm mounted on the carrier to rotate around a first pivot axis A spindle bearing unit is mounted to swivel on the arm. The spindle has a swivel axis spatially at right-angles to the first pivot axis, and a tool spindle fitted in the spindle bearing unit to rotate around a second pivot axis. The second pivot axis is located spatially at right-angles to the swivel axis of the spindle unit. The tool spindle is longitudinally movable by a tailstock sleeve.

EP 0453747 A discloses an apparatus for cutting tubes comprising a cutting tool arranged on a tool carrier movable along three directions X, Y, Z perpendicular to one another and rotatable around an axis perpendicular to a plane defined by two of said three directions.

DE 4332630 A1 discloses an apparatus for the cutting production of cutouts in planar elements, in particular for, machining formwork panels for permanent formwork; the apparatus has a workpiece receptacle which defines a clamping plane for the planar element, and a machining unit which is movable relative to the workpiece receptacle in two coordinate directions parallel to the clamping plane. The machining unit has a tool carrier which is movable to and fro at right angles to the clamping plane. The tool carried by the tool carrier can be adjusted about a rotary axis running at right angles to the clamping plane, and also about a tilting axis parallel to the clamping plane.

JP 05220701 A discloses an oblique cutting device for end of wood in which a piece of wood is moved horizontally in a moving direction x by means of a conveying device held in a travelling frame movable along said moving direction; a first pivoting frame is pivotably hung down, in a plane xy defined by said moving direction x and by a direction y perpendicular to the moving direction x, through a shaft hung down from the first travelling frame in a direction z perpendicular to the plane xy. A second travelling frame is linearly movably installed onto the first pivoting frame in the xy-plane. A second pivoting frame is pivotably installed onto the second travelling frame in the plane xy. A saw blade driving unit is installed onto the second pivoting frame.

US 2004/069106 discloses an apparatus for cutting a workpiece at a compound angle. The apparatus comprises a linear feed assembly capable of automatically moving a workpiece along its longitudinal axis and an automated cutting assembly having at least one cutting blade, the cutting blade being rotatable about a pivot axis, movable along a vertical axis into and out of cutting contact with a workpiece, and rotatable along a bevel axis, the apparatus thereby able to cut the workpiece at a compound angle.

An object of the invention is to improve the known machine tools for machining elongated profiled elements, in particular profiled elements of window and door frames.

Another object is to obtain a machine tool that can perform automatically a plurality of different machinings on an element, without requiring manual intervention of an operator.

A further object is to obtain a machine tool that can perform a plurality of machinings maintaining the elements to be machined always positioned and fixed to supporting means of the machine.

Still another object is to carry out a machine tool that enables complex and composite machinings to be performed with one or more actions of cutting tool.

A still further object is to obtain a machine tool that allows increasing productivity with respect to known machine tools, in particular in the case of complex machinings.

In a first aspect of the invention a machine tool is provided for machining elongated profiled elements, in particular profiled elements of frames, comprising a cutting unit for rotatably supporting a disc blade, supporting means of an element to be machined, driving means for moving said cutting unit and/or said supporting means so as to cause an interaction between said element and said disc blade, characterized in that said supporting means being such as to enable said element to perform a rotation around a rotation axis coinciding with, or parallel to, a longitudinal axis of said element, said supporting means being movable by said driving means along a motion direction substantially parallel to said rotation axis, said cutting unit being movable along a first advancing direction that is substantially orthogonal to said rotation axis and along a second advancing direction that is substantially orthogonal to said first advancing direction and to said rotation axis, said cutting unit comprising a holding arm, which rotatably supports said disc blade, said holding arm being mounted rotatably around a further rotation axis.

In particular, the machine can perform a plurality of machinings maintaining the element always positioned and fixed on supporting means. The element can be rotated around a longitudinal rotation axis and the cutting unit can be moved in a rectilinear manner according to two controlled motion axes, while the disc blade can be rotated around a further controlled rotation axis. In this way, the machine makes possible to perform complex and composed machinings, with one or more successive actions of cutting blade. This significantly increases the machine productivity, as the machinings can be automatically performed on the element without any need to dismantle said element and to reposition it on supporting means. Furthermore, more precise and exact machinings can be performed, since mounting and positioning errors and imprecisions can be avoid that may occur following to manual repositioning of the element by a operator.

In a second aspect of the invention there is provided a method for cutting elongated profiled element, in particular profiled elements of frames, using a rotating disc blade movable along a first advancing direction and a second advancing direction that are almost orthogonal to one another and almost orthogonal to a longitudinal axis of said element, comprising moving said disc blade along said second advancing direction to perform a first transverse cut on an element to be cut, moving said disc blade along said first advancing direction by a set quantity, moving said disc blade along said second advancing direction to perform a second transverse cut complementary to said first transverse cut in such a way as to cut said element into two distinct portions, said method further comprising moving said element along a motion direction that is substantially orthogonal to said first advancing direction and to said second advancing direction, rotating said element around a rotation axis substantially parallel to said motion direction and rotating said disc blade by a set angle around a rotation axis before said moving said disc blade along said second advancing direction, said rotation axis being substantially parallel to said second advancing direction.

Owing to this aspect of the invention it is possible to perform transverse straight or angled cuts of elements having cross sections of large dimensions without the need to use blades of suitable dimensions and/or to reposition the element to be cut on supporting means of the machine. The method in fact comprises cutting in two subsequent actions or passes of a cutting disc blade having smaller dimensions than those necessary for performing a cut with a single pass.

The method thus enables reducing machine running costs, as cutting blades of large sizes are not required according to dimensions of the elements to be cut. Furthermore, since it is not necessary to replace the cutting tool, it is possible clamping device 3, a second clamping device 4 and a third clamping device 5 which are slidingly supported by a machine bed 11 and are movable along a motion direction X which is substantially parallel to said rotation axis A.

In particular, the clamping devices 3, 4, 5 are slidably mounted on third guides 17 of the machine bed 11 and are arranged aligned along said motion direction X to support and clamp an elongated element 50.

The driving means comprises first motor means 34, second motor means 44 and third motor means 54 arranged for independently moving first clamping device 3, second clamping device 4 and third clamping device 5.

Motion transmitting means is provided for enabling the aforesaid motor means 34, 44, 54 to move the respective clamping devices 3, 4, 5.

Said motion transmitting means includes, for example, a rack 19 fixed to the machine bed 11 of the machine 1 and engaged by toothed wheels of the motor means, of electric and rotating type.

The motor means 34, 44, 54 is controlled by a machine control unit, known and not shown in figures, in such a way as to arrange clamping devices 3, 4, 5 in a plurality of different positions, according to dimensions of element 50 and/or machinings to be performed on said element.

Furthermore, motor means 34, 44, 54 enables clamping devices 3, 4, 5 to advance so as to automatically move the element 50 with respect to cutting unit 2 along the motion direction X.

Each clamping device 3, 4, 5 comprises a respective supporting element 31, 41, 51 for rotatably holding a respective vice 32, 42, 52. In particular, each vice 32, 42, 52 can be rotated around the rotation axis A by a desired angle comprised between 0° and 360°, in particular between 0° and 90°. For this purpose, the driving means comprises first actuating means 33, second actuating means 43 and third actuating means 53, respectively associated with the first clamping device 3, the second clamping device 4 and the third clamping device 5 for rotating the respective vices 32, 42, 52.

The actuating means 33, 43, 53 are, for example, linear electric actuators, controlled by the machine control unit so as to rotate the elongated element 50 in a coordinated manner in the same rotation direction and by the same angular amount.

The vices 32, 42, 53 of the clamping devices 3, 4, 5 are thus movable in a rectilinear direction (motion direction X) and a rotational direction (rotation axis A) according to motion axes of numeric control (CNC) type, managed by the machine control unit.

Each vice 32, 42, 52 comprises at least a pair of respective opposing jaws for clamping opposite sides of the element 50.

The machine 1 is further provided with further supporting means 6, arranged for slidingly supporting the elongated element 50 and comprising, for example, a roller conveyor 6 extending in the motion direction X and associated with the third clamp device 5. The roller conveyor 6 enables the elongated elements 50 to be positioned and supported before they are supported and clamped by supporting means 3, 4, 5.

In a version of the machine that is not illustrated, the roller conveyor is not associated with the third clamping device 5, but is provided with a respective supporting element that is slidably fixed to third guides 17 of machine bed 11 and is independently driven by respective motor means, which motor means is also controlled by the machine control unit.

The cutting unit 2 is slidably supported by frame means 10 fixed to the machine bed 11. In particular, the cutting unit 2 is connected to frame means 10 in such a way as to be movable along a first advancing direction Y and along a second advancing direction Z that are substantially orthogonal to one another and to the rotation axis A.

For this purpose, the cutting unit 2 is fixed to the frame means 10 by connecting means 12 comprising, for example, a first carriage 13 and a second carriage 14.

The first carriage 13 is slidable along first guides 15 of the frame means 10, substantially parallel to the first advancing direction Y and slidingly supports the second carriage 14. The latter engages second guides 16 of first carriage 13, which are substantially parallel to the second advancing direction Z.

The driving means of the machine comprises fourth motor means 25 and fifth motor means 26 configured for moving respectively said first carriage 13 along the first advancing direction Y and said second carriage 14 along the second advancing direction Z.

The cutting unit 2 is provided with a holding arm 22 which rotatably supports the disc blade 21.

The holding arm 22 is mounted rotatably around a further rotation axis C that is almost orthogonal to a revolution axis D around which the disc blade 21 rotates during cutting. The further rotation axis C is further almost parallel to the second advancing direction Z. Rotation of holding arm 22 is achieved by means of fourth actuating means 27 of said driving means, located on the cutting unit 2.

The disc blade 21 is therefore movable in a rectilinear manner along two orthogonal axes (advancing directions Y, Z) and rotationally around an axis (further rotation axis C). The aforesaid motion axes are of numeric control (CNC) type managed by the machine control unit of machine tool 1.

The machine 1 may further comprise a milling unit 8 coupled to frame means 10 in such a way as to be movable along a third advancing direction Y1 and along a fourth advancing direction Z1, that are orthogonal to one another. In particular, the third advancing direction Y1 and the fourth advancing direction Z1 are respectively almost parallel to the first advancing direction Y and to the second advancing direction Z of cutting unit 2.

For this purpose, milling unit 8 is fixed to frame means 10 by further connecting means 18 comprising, for example, a third carriage 23 and a fourth carriage 24. The third carriage 23 is slidable along respective guides fixed to the frame means 10 and substantially parallel to third advancing direction Y1.

The fourth carriage 24 is slidably connected to respective guides of third carriage 23, which are substantially parallel to fourth advancing direction Z1.

The milling unit 8 is provided with a couple of opposite spindles 9 fixed to fourth carriage 24 and arranged for using a plurality of interchangeable tools.

The milling unit 8 is moved along the two advancing directions Y1, Z1 by further driving means, of known and not illustrated type, controlled by the machine control unit. Operation of machine tool 1 provides, for a cutting cycle of an elongated element 50, to position said element on roller conveyor 6 at third clamping device 5.

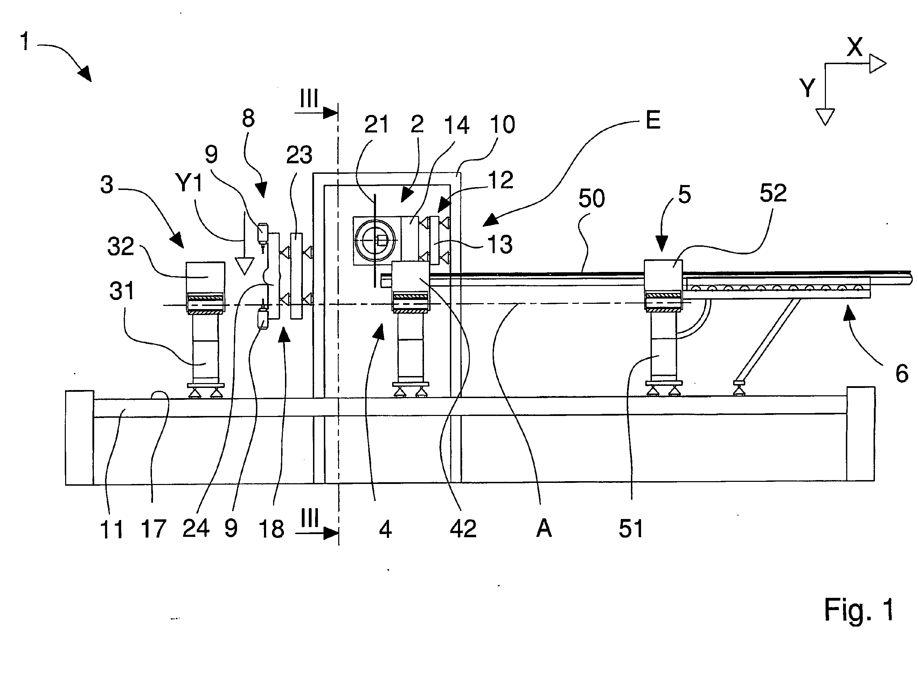

In order to perform a butting cut or an end cut on the element 50, so as to create a precise reference surface for subsequent machining, third clamping device 5 moves the element 50 along the motion direction X to a first work position E in which a free end of said element 50 faces the cutting unit 2. In this first work position E the element 50 is furthermore supported and clamped by second clamping device 4 (Figure 1).

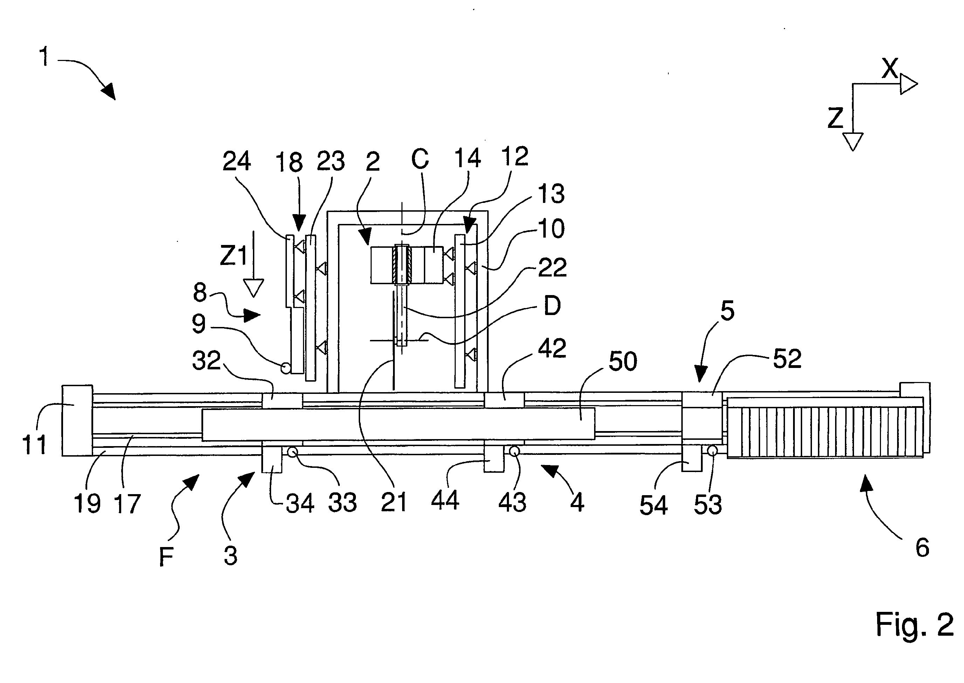

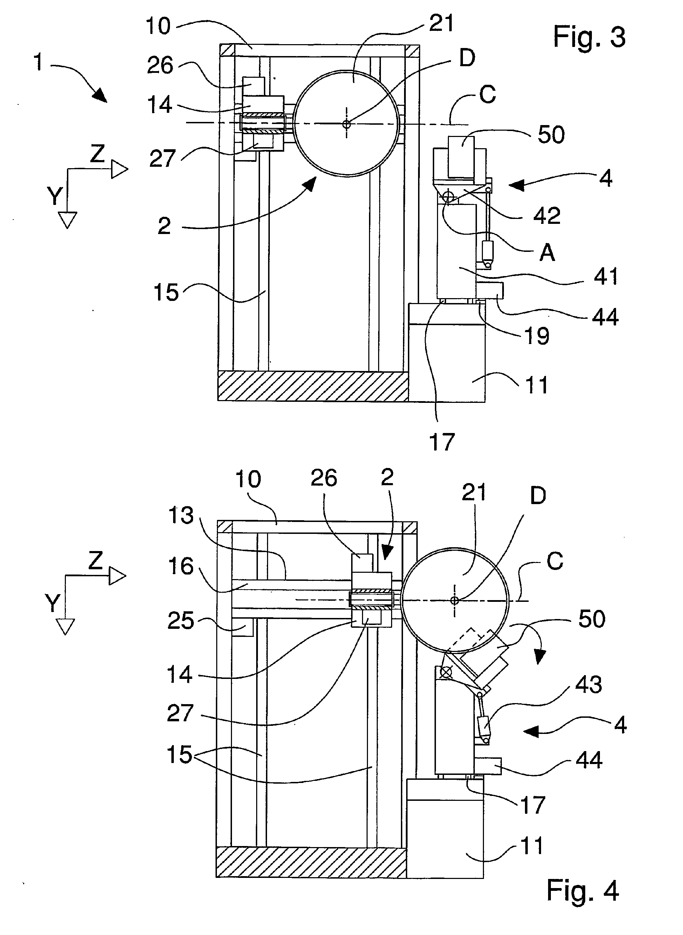

When the butting cut has been terminated, third clamping device 5 is driven so as to position the element 50 in a second work position F, between vices 32, 42 of first clamping device 3 and of second clamping device 4 (Figure 2). First clamping device 3 and second clamping device 4 are mutually positioned so as to limit bending of element 50 during cutting and avoid vibrations starting that could compromise cut quality and precision.

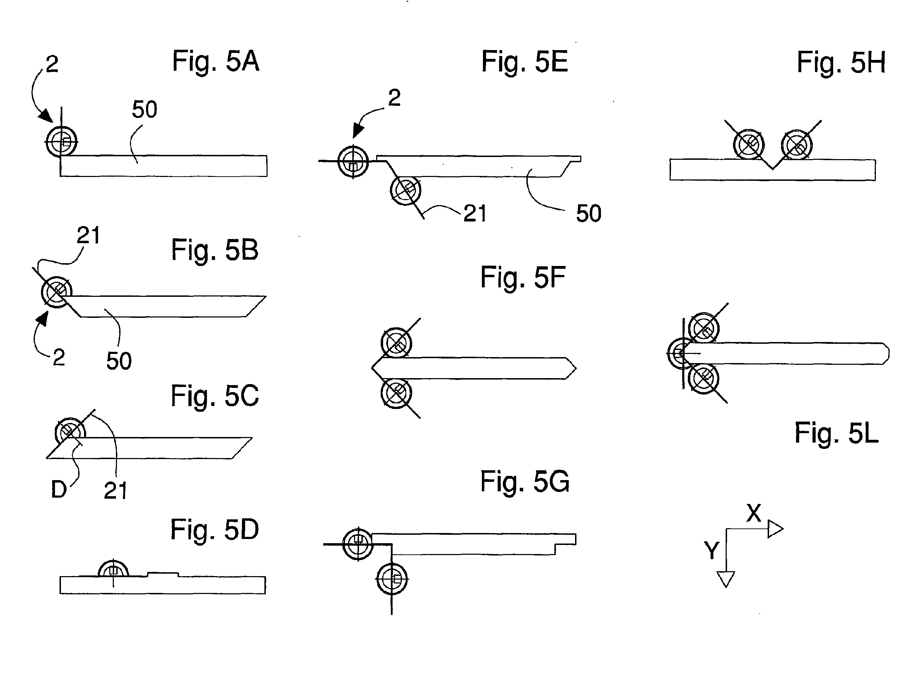

Once the cutting-off has been performed, the portion of element so obtained, which is comprised between first clamping device 3 and second clamping device 4, can be subjected to subsequent machinings, for example simple and or complex cuts, as shown in Figures 5A to 5L.,

These cuts can be carried out by rotating the disc blade 21 of the cutting unit 2 and by moving the latter and/or the clamping devices 3, 4, i.e. the element 50, respectively along the advancing directions Y, Z and the motion direction X.

The cutting unit 2 can perform machinings requiring only a single pass of the blade (Figure 5A-5D), two subsequent passes (Figure 5E-5H), three subsequent passes (Figure 5L).

The tilted or angled cuts illustrated in Figures 5B, 5C, 5E, 5F, 5H, 5L are made by moving in step, in an appropriately coordinated manner or in phase , the cutting unit 2 and the element 50.

In the case of horizontal longitudinal cuts (Figure 5D, 5E, 5G) the disc blade 21 is maintained in position, rotating around its revolution axis D, whilst the element 50 is moved along the motion direction X.

Rotation of the element 50 according to rotation axis A further allows performing machinings on different sides of said element and/or performing particular composite machinings, for example to make pyramid-shaped or undercut elements.

The machine 1 can perform a series of successive machinings on the element 50 maintaining the latter supported and clamped by supporting means 3, 4, 5. For example, the element 50 can be supported and clamped by first clamping device 3 and by second clamping device 4 to be subjected to two successive 45° end cuts. When the first cut has been performed, the clamping devices 3, 4 are driven in such a way as to move the element 50 to a second work position in which the latter is subjected to the second end cut.

The element 50 is thus stably and correctly positioned during the two subsequent machinings so as to ensure precision and accuracy of said machinings. Since it is not necessary to remove from supporting means 3, 4, 5 the element 50 and therefore to reposition the latter, positioning errors are thus avoided that could compromise machining precision and quality.

This advantage can be achieved also in further machinings performed by milling unit 8 on the element 50 for finishing thereof.

As the element 50 can be rotated around the rotation axis A and said milling unit 8 can be moved along the two respective advancing directions Y1, Z1, it is possible to perform said further machinings on all the sides of the element 50.

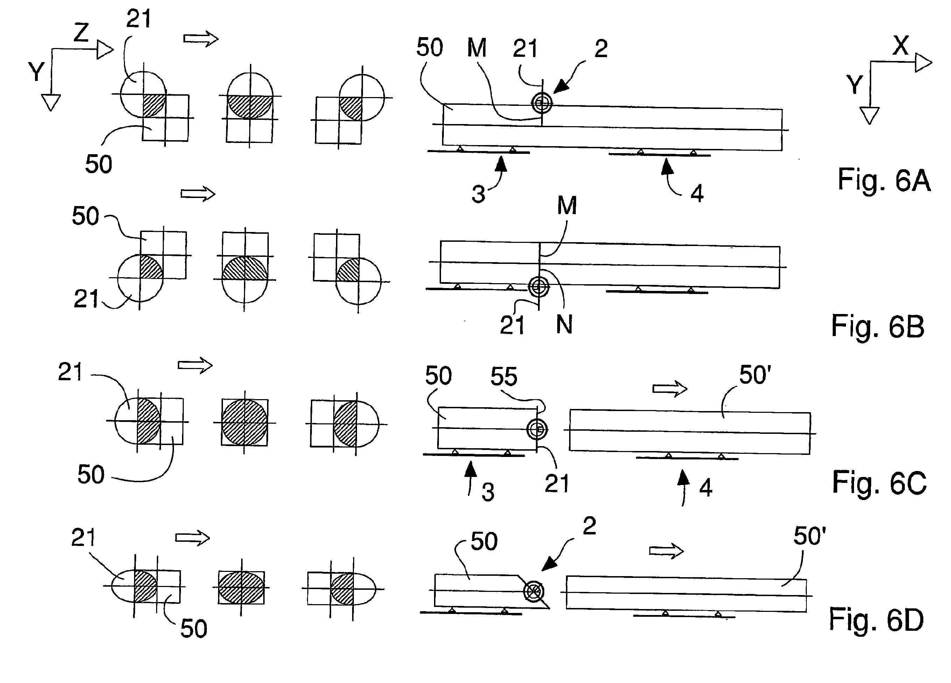

Machine tool 1 thus avoids the need to remove the element 50 from the machine tool to position it on a further finishing machine tool, with considerable time and cost savings. As illustrated in Figures 6A to 6D, machine tool 1 further allows performing straight and tilted cuts on elongated elements 50 having cross sections of large dimensions in two actions or passes, without the need to use blades of large dimensions.

In a first step the disc blade 21 is driven in the second advancing direction Z to perform a first transverse cut M on the element 50, the latter being supported and clamped, for example, by first clamping device 3 and by second clamping device 4 (Figure 6A).

In a second step, the disc blade 21 performs a second transverse cut N, complementary to said first transverse cut M (Figure 6B), in such a way as to cut said element 50 into two distinct portions (Figure 6C).

Before the second step, the blade 21, appropriately moved away from the element 50, is moved along the first advancing direction Y by a set quantity, the same as or less than half of transverse dimension of said element 50 according to said first advancing direction Y.

With reference to Figures 6A-6C, the first cut M is a straight cut or a cut that is orthogonal to a longitudinal axis of the element 50 and is performed on an upper portion thereof

The disc blade 21 is then lowered by said set quantity to perform the second cut N on the lower portion.

It is nevertheless provided for that first transverse cut M and second transverse cut N can be performed respectively on the lower portion and on the upper portion of element 50. Direction of movements of disc blade 21 along second advancing direction Z during the first cut M and the second cut N can be concordant, as illustrated in Figures 6A and 6B, or discordant.

After cutting, second clamping device 4 removes from the cutting unit 2 a portion 50' of the element, which portion 50' is obtained after cutting.

There is provided a third step in which the disc blade 21 of the type without flange finishes the cut surface 55 obtained by cuts M, N in order to achieve an enhanced and more homogenous surface finishing and a more precise geometry both in the case of a straight cut (Figure 6C) and of a tilted cut (Figure 6D).

Transverse cuts M, N may be coplanar or incident in such a way as to form a solid angle. In the latter case, the coordinated or in phase movement of element 50, according to motion direction X, is associated with the movement of cutting unit 2 along the first advancing direction Y.

## Claims

1. Machine tool for machining elongated profiled elements (50), in particular profiled elements of frames, comprising a cutting unit (2) for rotatably supporting a disc blade (21), supporting means (3, 4, 5) of an element (50) to be machined, driving means (25, 26, 27, 34, 44, 54) for moving said cutting unit (2) and/or.said supporting means (3, 4, 5) so as to cause an interaction between said element (50) and said disc blade (21), **characterized in that** said supporting means (3, 4, 5) being such as to enable said element (50) to perform a rotation around a rotation axis (A) coinciding with, or parallel to, a longitudinal axis of said element (50), said supporting means (3, 4, 5) being movable by said driving means (34, 44, 54) along a motion direction (X) substantially parallel to said rotation axis (A), said cutting unit (2) being movable along a first advancing direction (Y) that is substantially orthogonal to said rotation axis (A) and along a second advancing direction (Z) that is substantially orthogonal to said first advancing direction (Y) and to said rotation axis (A), said cutting unit (2) comprising a holding arm (22), which rotatably supports said disc blade (21), said holding arm (22) being mounted rotatably around a further rotation axis (C).

2. Machine according to claim 1, wherein said supporting means comprises a plurality of clamping devices (3, 4, 5) each of which is provided with respective vice means (32, 42, 52) for supporting and clamping said element (50).

3. Machine according to claim 2, wherein each clamping device (3, 4, 5) comprises holding means (31, 41, 51) slidably supported by machine bed means (11) of said machines (1) and arranged for rotatably supporting said vice means (32, 42, 52) around said rotation axis (A).

4. Machine according to claim 2 or 3, wherein said driving means comprises a plurality of motor means (34, 44, 54), each of which is associated with a respective clamping device (3, 4, 5) for moving the latter along said motion direction (X).

5. Machine according to any one of claims 2 to 4, wherein said driving means comprises a plurality of actuating means (33, 43, 53) each of which is associated with a respective clamping device (3, 4, 5) for rotating said vice means (32; 42, 52).

6. Machine according to any preceding claim, comprising further supporting means (6) for supporting said elongated element (50).

7. Machine according to claim 6, wherein said further supporting means (6) comprises a roller conveyor.

8. Machine according to claim 6 or 7, as claim 6 is appended to any one of claims 2 to 5, wherein said further supporting means (6) is associated with one of said clamping devices (3, 4, 5).

9. Machine according to claim 3 and any one of claims 6 to 8, wherein said further supporting means (6) is slidably supported by said machine bed means (11).

10. Machine according to any one of claims 6 to 9, comprising further driving means suitable for moving said further supporting means (6) along said motion direction (X).

11. Machine according to any preceding claims, comprising connecting means (12) for coupling said cutting unit (2) to frame means (10) of said machine (1).

12. machine according to claim 11, wherein said connecting means (12) comprises a first carriage (13) and a second carriage (14), said first carriage (13) being slidably connected to said frame means (10) and arranged for slidably supporting said second carriage (14).

13. Machine according to claim 12, wherein said first carriage (13) engages first guides (15) of frame means (10), said first guides (15) being almost parallel to said first advancing direction (Y).

14. Machine according to claim 12 or 13, wherein said second carriage (14) engages second guides (16) of said first carriage (13), said second guides (16) being almost parallel to said second advancing direction (Z).

15. Machine according to any preceding claims, wherein said driving means comprises further motor means (25, 26) for moving said cutting unit (2) along said advancing directions (Y, Z).

16. Machine according to any preceding claim, wherein said further rotation axis (C) is substantially orthogonal to a revolution axis (D) of said disc blade (21).

17. Machine according to claim 16, wherein said further rotation axis (C) is substantially parallel to said second advancing direction (Z).

18. Machine according to claim 16, or 17, wherein said driving means comprises further actuating means (27) for rotating said holding arm (22).

19. Machine according to any preceding claim, further comprising a milling unit (8) for performing machinings on said element (50).

20. Machine according to claim 19, wherein said milling unit (8) is movable along a third advancing direction (Y1).

21. Machine according to claim 19 or 20, wherein said milling unit (8) is movable along a fourth advancing direction (Z1).

22. Machine according to claims 20 and 21, wherein said third advancing direction (Y1) and said fourth advancing direction (Z1) are substantially parallel respectively to said first advancing direction (Y) and to said second advancing direction (Z).

23. Machine according to any preceding claim, comprising a machine control unit at least for controlling said driving means for moving said cutting unit (2) and said supporting means (3, 4, 5) in a coordinated manner.

24. Method for cutting elongated profiled elements (50), in particular profiled elements of frames, using a rotating disc blade (21) movable along a first advancing direction (Y) and a second advancing direction (Z) that are almost orthogonal to one another and almost orthogonal to a longitudinal axis of said element (50), comprising moving said disc blade (21) along said second advancing direction (Z) to perform a first transverse cut (M) on an element (50) to be cut, moving said disc blade (21) along said first advancing direction (Y) by a set quantity, moving said disc blade (21) along said second advancing direction (Z) to perform a second transverse cut (N) complementary to said first transverse cut (M) in such a way as to cut said element (50) into two distinct portions, said method further comprising moving said element (50) along a motion direction (X) that is substantially orthogonal to said first advancing direction (Y) and to said second advancing direction (Z), rotating said element (50) around a rotation axis (A) substantially parallel to said motion direction (X) and rotating said disc blade (21) by a set angle around a rotation axis (C) before said moving said disc blade (21) along said second advancing direction (Z), said rotation axis (C) being substantially parallel to said second advancing direction (Z).

25. Method according to claim 24, wherein said moving said element (50) along said motion direction (X) and said moving said disc blade (21) along said second advancing direction (Z) are coordinated.

26. Method according to claim 24 or 25, further comprising acting with said disc blade (21) on a cut surface (55) obtained by means of said transverse cuts (M, N).

27. Method according any one of claims 24 to 26, wherein moving said disc blade (21) and rotating said element (50) around said rotation axis (A) are coordinated.

## Patentansprüche

1. Werkzeugmaschine zum maschinellen Bearbeiten länglicher Profilelemente (50), insbesondere Profilelemente von Rahmen, mit einer Schneideinheit (2) zum drehbaren Stützen einer Tellerschneide (21), Stützmitteln (3, 4, 5) zum Stützen eines maschinell zu bearbeitenden Elements (50), Antriebsmitteln (25, 26, 27, 34, 44, 54) zum Bewegen der Schneideinheit (2) und/oder der Stützmittel (3, 4, 5), um eine Wechselwirkung zwischen dem Element (5) und der Tellerschneide (21) zu bewirken, **dadurch gekennzeichnet, dass** die Stützmittel (3, 4, 5) derart ausgebildet sind, dass sie es dem Element (50) ermöglichen, eine Drehung um eine Drehachse (A) auszuführen, die mit einer Längsachse des Element (50) zusammenfällt oder zu dieser parallel ist, wobei die Stützmittel (3, 4, 5) durch die Antriebsmittel (34, 44, 54) entlang einer Bewegungsrichtung (X) beweglich sind, die im Wesentlichen parallel zu der Drehachse (A) ist, wobei die Schneideinheit (2) entlang einer ersten Vorrückrichtung (Y), die im Wesentlichen orthogonal zu der Drehachse (A) ist, und entlang einer zweiten Vorrückrichtung (Z) beweglich ist, die im Wesentlichen orthogonal zu der ersten Vorrückrichtung (Y) und zu der Drehachse (A) ist, wobei die Schneideinheit (2) einen Haltearm (22) aufweist, der die Tellerschneide (21) drehbar stützt, wobei der Haltearm (22) um eine weitere Drehachse (C) drehbar angebracht ist.

2. Maschine nach Anspruch 1, wobei die Stützmittel eine Mehrzahl an Klemmvorrichtungen (3, 4, 5) aufweisen, von denen jede mit jeweiligen Schraubstockmitteln (32, 42, 52) zum Stützen und Klemmen des Elements (50) versehen ist.

3. Maschine nach Anspruch 2, wobei jede Klemmvorrichtung (3, 4, 5) Haltemittel (31, 41, 51) aufweist, die von Maschinenbettmitteln (11) der Maschine (1) verschieblich gestützt werden und dazu ausgelegt sind, die Schraubstockmittel (32, 42, 52) um die Drehachse (A) drehbar zu stützen.

4. Maschine nach Anspruch 2 oder 3, wobei die Antriebsmittel eine Mehrzahl an Motormitteln (34, 44, 54) aufweisen, die jeweils mit einer jeweiligen Klemmvorrichtung (3, 4, 5) zum Bewegen der letzteren entlang der Bewegungsrichtung (X) verbunden sind.

5. Maschine nach einem der Ansprüche 2 bis 4, wobei die Antriebsmittel eine Mehrzahl an Betätigungsmitteln (33, 43, 53) aufweisen, die jeweils mit einer jeweiligen Klemmvorrichtung (3, 4, 5) zum Drehen der Schraubstockmittel (32, 42, 52) verbunden sind.

6. Maschine nach einem der vorhergehenden Ansprüche, mit weiteren Stützmitteln (6) zum Stützen des länglichen Elements (50).

7. Maschine nach Anspruch 6, wobei die weiteren Stützmittel (6) einen Rollenförderer aufweisen.

8. Maschine nach Anspruch 6 oder 7, soweit Anspruch 6 von einem der Ansprüche 2 bis 5 abhängig ist, wobei die weiteren Stützmittel (6) mit einer der Klemmvorrichtungen (3, 4, 5) verbunden sind.

9. Maschine nach Anspruch 3 und einem der Ansprüche 6 bis 8, wobei die weiteren Stützmittel (6) von den Maschinenbettmitteln (11) verschieblich gestützt sind.

10. Maschine nach einem der Ansprüche 6 bis 9, mit weiteren Antriebsmitteln, die dazu geeignet sind, die weiteren Stützmittel (6) entlang der Bewegungsrichtung (X) zu bewegen.

11. Maschine nach einem der vorhergehenden Ansprüche, mit Verbindungsmitteln (12) zum Koppeln der Schneideinheit (2) an Rahmenmitteln (10) der Maschine (1).

12. Maschine nach Anspruch 11, wobei die Verbindungsmittel (12) einen ersten Schlitten (13) und einen zweiten Schlitten (14) aufweisen, wobei der erste Schlitten (13) mit den Rahmenmitteln (10) verschieblich verbunden ist und dazu ausgelegt ist, den zweiten Schlitten (14) verschieblich zu halten.

13. Maschine nach Anspruch 12, wobei der erste Schlitten (13) mit ersten Führungen (15) der Rahmenmittel (10) in Eingriff steht, wobei die ersten Führungen (15) nahezu parallel zu der ersten Vorrückrichtung (Y) sind.

14. Maschine nach Anspruch 12 oder 13, wobei der zweite Schlitten (14) mit zweiten Führungen (16) des ersten Schlittens (13) in Eingriff steht, wobei die zweiten Führungen (16) nahezu parallel zu der zweiten Vorrückrichtung (Z) sind.

15. Maschine nach einem der vorhergehenden Ansprüche, wobei die Antriebsmittel weitere Motormittel (25, 26) zum Bewegen der Schneideinheit (2) entlang der Vorrückrichtungen (Y, Z) aufweisen.

16. Maschine nach einem der vorhergehenden Ansprüche, wobei die weitere Drehachse (C) im Wesentlichen orthogonal zu einer Umlaufachse (D) der Tellerschneide (21) ist.

17. Maschine nach Anspruch 16, wobei die weitere Drehachse (C) im Wesentlichen parallel zu der zweiten Vorrückrichtung (Z) ist.

18. Maschine nach Anspruch 16 oder 17, wobei die Antriebsmittel weitere Betätigungsmittel (27) zum Drehen des Haltearms (22) aufweisen.

19. Maschine nach einem der vorhergehenden Ansprüche, weiterhin mit einer Fräseinheit (8) zum Durchführen von maschinellen Bearbeitungen an dem Element (50).

20. Maschine nach Anspruch 19, wobei die Fräseinheit (8) entlang einer dritten Vorrückrichtung (Y1) beweglich ist.

21. Maschine nach Anspruch 19 oder 20, wobei die Fräseinheit (8) entlang einer vierten Vorrückrichtung (Z1) beweglich ist.

22. Maschine nach den Ansprüchen 20 und 21, wobei die dritte Vorrückrichtung (Y1) und die vierte Vorrückrichtung (Z1) jeweils im Wesentlichen parallel zu der ersten Vorrückrichtung (Y) und zur zweiten Vorrückrichtung (Z) sind.

23. Maschine nach einem der vorhergehenden Ansprüche, mit einer Maschinensteuerungseinheit zumindest zum Steuern der Antriebsmittel zum Bewegen der Schneideinheit (2) und der Stützmittel (3, 4, 5) in koordinierter Weise.

24. Verfahren zum Schneiden von länglichen Profilelementen (50), insbesondere Profilelementen von Rahmen, unter Verwendung einer drehenden Tellerschneide (21), die entlang einer ersten Vorrückrichtung (Y) und einer zweiten Vorrückrichtung (Z) beweglich ist, die annähernd orthogonal zueinander und annähernd orthogonal zu einer Längsachse des Elements (50) sind, mit den Schritten: Bewegen der Tellerschneide (21) entlang der zweiten Vorrückrichtung (Z), um einen ersten quer verlaufenden Schnitt (M) an einem zu schneidenden Element (50) durchzuführen, Bewegen der Tellerschneide (21) entlang der ersten Vorrückrichtung (Y) um einen eingestellten Betrag, Bewegen der Tellerschneide (21) entlang der zweiten Vorrückrichtung (Z), um einen zweiten quer verlaufenden Schnitt (N), der zu dem ersten quer verlaufenden Schnitt (M) komplementär ist, auf solche Weise durchzuführen, um das Element (50) in zwei unterschiedliche Abschnitte zu schneiden, wobei das Verfahren weiterhin die Schritte aufweist: Bewegen des Elements (50) entlang einer Bewegungsrichtung (X), die im Wesentlichen orthogonal zu der ersten Vorrückrichtung (Y) und zu der zweiten Vorrückrichtung (Z) ist, Drehen des Elements (50) um eine Drehachse (A), die im Wesentlichen parallel zu der Bewegungsrichtung (X) ist, und Drehen der Tellerschneide (21) um einen eingestellten Winkel um eine Drehachse (C) vor dem Bewegen der Tellerschneide (21) entlang der zweiten Vorrückrichtung (Z), wobei die Drehachse (C) im Wesentlichen parallel zu der zweiten Vorrückrichtung (Z) ist.

25. Verfahren nach Anspruch 24, wobei das Bewegen des Elements (50) entlang der Bewegungsrichtung (X) und das Bewegen der Tellerschneide (21) entlang der zweiten Vorrückrichtung (Z) koordiniert sind.

26. Verfahren nach Anspruch 24 oder 25, weiterhin mit dem Schritt: Einwirken mit der Tellerschneide (21) auf eine geschnittene Oberfläche (55), die mittels der quer verlaufenden Schnitte (M, N) erhalten wurde.

27. Verfahren nach einem der Ansprüche 24 bis 26, wobei das Bewegen der Tellerschneide (21) und Drehen des Elements (50) um die Drehachse (A) koordiniert sind.

## Revendications

1. Machine-outil pour usiner des éléments profilés allongés (50), en particulier des éléments de cadre profilés, comprenant une unité de coupe (2) destinée à soutenir de manière rotative une lame circulaire (21), des moyens de support (3, 4, 5) d'un élément (50) à usiner, des moyens d'entraînement (25, 26, 27, 34, 44, 54) destinés à déplacer ladite unité de coupe (2) et/ou lesdits moyens de support (3, 4, 5) afin de provoquer une interaction entre ledit élément (50) et ladite lame circulaire (21), ***caractérisée en ce que*** lesdits moyens de support (3, 4, 5) sont tels qu'ils permettent audit élément (50) d'effectuer une rotation autour d'un axe de rotation (A) coïncidant avec, ou parallèle à, un axe longitudinal dudit élément (50), lesdits moyens de support (3, 4, 5) étant déplaçables par lesdits moyens d'entraînement (34, 44, 54) le long d'une direction de déplacement (X) sensiblement parallèle audit axe de rotation (A), ladite unité de coupe (2) étant mobile le long d'une première direction de progression (Y) qui est sensiblement orthogonale audit axe de rotation (A) et le long d'une deuxième direction de progression (Z) qui est sensiblement orthogonale à ladite première direction de progression (Y) et à ladite direction de rotation (A), ladite unité de coupe (2) comprenant un bras de maintien (22) qui supporte de manière rotative ladite lame circulaire (21), ledit bras de maintien (22) étant monté rotatif autour d'un autre axe de rotation (C).

2. Machine selon la revendication 1, dans laquelle lesdits moyens de support comprennent une pluralité de dispositifs de serrage (3, 4, 5) dont chacun est muni de moyens d'étau respectifs (32, 42, 52) pour soutenir et serrer ledit élément (50).

3. Machine selon la revendication 2, dans laquelle chaque dispositif de serrage (3, 4, 5) comprend des moyens de maintien (31, 41, 51) portés de manière coulissante par des moyens formant banc de machine (11) de la machine (1) et agencés pour soutenir de manière rotative lesdits moyens d'étau (32, 42, 52) autour dudit axe de rotation (A).

4. Machine selon la revendication 2 ou 3, dans laquelle lesdits moyens d'entraînement comprennent une pluralité de moyens de moteur (34, 44, 54), dont chacun est associé à un dispositif de serrage (3, 4, 5) respectif pour déplacer ces derniers dans ladite direction de déplacement (X).

5. Machine selon l'une quelconque des revendications 2 à 4, dans laquelle lesdits moyens d'entraînement comprennent une pluralité de moyens d'actionnement (33, 43, 53) dont chacun est associé à un dispositif de serrage (3, 4, 5) respectif pour faire tourner lesdits moyens d'étau (32, 42, 52).

6. Machine selon l'une quelconque des revendications précédentes, comprenant des moyens de support supplémentaires (6) pour soutenir ledit élément allongé (50).

7. Machine selon la revendication 6, dans laquelle lesdits moyens de support supplémentaires (6) comprennent un transporteur à rouleaux.

8. Machine selon la revendication 6 ou 7, lorsque la revendication 6 étant dépendante de l'une quelconque des revendications 2 à 5, dans laquelle lesdits moyens de support supplémentaires (6) sont associés à l'un desdits dispositifs de serrage (3, 4, 5).

9. Machine selon la revendication 3 et l'une quelconque des revendications 6 à 8, dans laquelle lesdits moyens de support supplémentaires (6) sont soutenus de manière coulissante par lesdits moyens (11) de banc de machine.

10. Machine selon l'une quelconque des revendications 6 à 9, comprenant des moyens d'entraînement supplémentaires aptes à déplacer lesdits moyens de support supplémentaires (6) le long de ladite direction de déplacement (X).

11. Machine selon l'une quelconque des revendications précédentes, comprenant des moyens de raccordement (12) pour coupler ladite unité de coupe (2) à des moyens de bâti (10) de ladite machine (1).

12. Machine selon la revendication 11, dans laquelle lesdits moyens de raccordement (12) comprennent un premier chariot (13) et un deuxième chariot (14), ledit premier chariot (13) étant relié de manière coulissante auxdits moyens de bâti (10) et agencés pour soutenir de manière coulissante ledit deuxième chariot (14).

13. Machine selon la revendication 12, dans laquelle ledit premier chariot (13) engage des premiers guides (15) des moyens de bâti (10), lesdits premiers guides (15) étant presque parallèles à laite première direction de progression (Y).

14. Machine selon la revendication 12 ou 13, dans laquelle ledit deuxième chariot (14) engage des deuxième guides (16) dudit premier chariot (13), lesdits deuxième guides (16) étant presque parallèles à ladite deuxième direction de progression (Z).

15. Machine selon l'une quelconque des revendications précédentes, dans laquelle lesdits moyens d'entraînement comprennent des moyens de moteur (25, 26) pour déplacer ladite unité de coupe (2) le long desdites directions de progression (Y, Z).

16. Machine selon l'une quelconque des revendications précédentes, dans laquelle ledit axe de rotation supplémentaire (C) est sensiblement orthogonal à un axe de rotation (D) de ladite lame circulaire (21).

17. Machine selon la revendication 16, dans laquelle ledit axe de rotation supplémentaire (C) est sensiblement parallèle à ladite deuxième direction de progression (Z).

18. Machine selon la revendication 16 ou 17, dans laquelle lesdits moyens d'entraînement comprennent des moyens d'actionnement supplémentaires (27) pour faire tourner ledit bras de maintien (22).

19. Machine selon l'une quelconque des revendications précédentes, comprenant de plus une unité de fraisage (8) pour réaliser des usinages sur ledit élément (50).

20. Machine selon la revendication 19, dans laquelle ladite unité de fraisage (8) est mobile le long d'une troisième direction de progression (Y1).

21. Machine selon la revendication 19 ou 20, dans laquelle ladite unité de fraisage (8) est mobile le long d'une quatrième direction de progression (Z1).

22. Machine selon les revendications 20 et 21, dans laquelle ladite troisième direction de progression (Y1) et ladite quatrième direction de progression (Z1) sont sensiblement parallèles respectivement à ladite première direction de progression (Y) et à ladite deuxième direction de progression (Z).

23. Machine selon l'une quelconque des revendications précédentes, comprenant une unité de commande de la machine au moins pour commander lesdits moyens d'entraînement afin de déplacer ladite unité de coupe (2) et lesdits moyens de support (3, 4, 5) d'une manière coordonnée.

24. Procédé pour découper des éléments profilés allongés (50), en particulier des éléments de cadre profilés, à l'aide d'une lame circulaire (21) mobile le long d'une première direction de progression (Y) et d'une deuxième direction de progression (Z) qui sont presque orthogonales l'une par rapport à l'autre et presque orthogonales à un axe longitudinal dudit élément (50), comprenant le déplacement de ladite lame circulaire (21) le long de ladite deuxième direction de progression (Z) pour effectuer une première découpe transversale (M) sur un élément (50) à couper, le déplacement de ladite lame circulaire (21) d'une valeur fixée, le long de ladite première direction de progression (Y), le déplacement de ladite lame circulaire (21) le long de ladite deuxième direction de progression (Z) pour effectuer une deuxième découpe transversale (N) complémentaire de ladite première découpe transversale (M) de façon à couper ledit élément (50) en deux parties distinctes, ledit procédé comprenant de plus le déplacement dudit élément (50) le long d'une direction de déplacement (X) qui est sensiblement orthogonale à ladite première direction de progression (Y) et à ladite deuxième direction de progression (Z), la rotation dudit élément (50) autour d'un axe de rotation (A) sensiblement parallèle à ladite direction de déplacement (X) et la rotation de ladite lame circulaire (21) d'un angle fixé autour d'un axe de rotation (C) avant ledit déplacement de ladite lame circulaire (21) le long de ladite deuxième direction de progression (Z), ledit axe de rotation (C) étant sensiblement parallèle à ladite deuxième direction de progression (Z).

25. Procédé selon la revendication 24, dans lequel ledit déplacement dudit élément (50) le long de ladite direction de déplacement (X) et ledit déplacement de ladite lame circulaire (21) le long de ladite direction de progression (Z) sont coordonnés.

26. Procédé selon la revendication 24 ou 25, comprenant de plus le fait d'agir avec ladite lame circulaire (21) sur une surface de découpe (55) obtenue au moyen desdites découpes transversales (M, N).

27. Procédé selon l'une quelconque des revendications 24 à 26, dans lequel le déplacement de ladite lame circulaire (21) et la rotation dudit élément (50) autour dudit axe de rotation (A) sont coordonnés.
